# FASCICULE DE BREVET EUROPEEN

(11) **EP 0 990 106 B1**
(45) Date de publication et mention de la délivrance du brevet: **17.09.2003**
(21) Numéro de dépôt: 99914619.4
(22) Date de dépôt: 20.04.1999
(51) Int. Cl.: F25B 39/04, B60H 1/32

(54) **CONDENSEUR DE CLIMATISATION COMPRENANT UN RESERVOIR MONTE SUR UNE EMBASE**
KONDENSATOR FÜR KLIMAANLAGE MIT SAMMLER MONTIERT AN HALTERUNG
AIR CONDITIONING CONDENSER COMPRISING A RESERVOIR MOUNTED ON A BASE

(30) Priorité: 20.04.1998 FR 9804922
(43) Date de publication de la demande: 05.04.2000
(73) Titulaire: VALEO THERMIQUE MOTEUR S.A., 78321 La Verrière (FR)
(72) Inventeur: GILLE, Gérard, F-91550 Paray Vieille Poste (FR); HU, Zaiqian, F-78280 Guyancourt (FR)
(86) Numéro de dépôt international: FR9900924
(87) Numéro de publication internationale: WO99054672

(56) Documents cités:
- EP-A- 0 480 330
- EP-A- 0 769 666
- EP-A- 0 838 642
- PATENT ABSTRACTS OF JAPAN vol. 097, no. 011, 28 novembre 1997 -& JP 09 184668 A (CALSONIC CORP), 15 juillet 1997
- PATENT ABSTRACTS OF JAPAN vol. 097, no. 005, 30 mai 1997 -& JP 09 026282 A (SHOWA ALUM CORP), 28 janvier 1997

## Description

L'invention concerne un condenseur propre à faire partie d'un circuit de fluide, notamment de fluide réfrigérant dans un dispositif de climatisation de l'habitacle d'un véhicule automobile, comprenant une boîte collectrice et un réservoir intermédiaire allongé pour le traitement et/ou l'accumulation du fluide, deux conduites de liaison étant prévues pour le transfert du fluide de la boîte collectrice au réservoir et inversement.

Dans un tel condenseur, comme il est bien connu, le réservoir intermédiaire peut remplir tout ou partie des fonctions suivantes: filtration et/ou déshydratation du fluide réfrigérant, compensation des variations de volume de celui-ci, séparation des phases liquide et gazeuse. Sa position intermédiaire, c'est-à-dire son interposition entre une partie amont et une partie aval du condenseur, permet de ne faire circuler dans la partie de celui-ci située en aval du réservoir que du fluide à l'état liquide, qui est ainsi sous-refroidi au dessous de la température d'équilibre liquide/gaz, améliorant les performances du condenseur et rendant celles-ci relativement indépendantes de la quantité de fluide contenue dans le circuit.

EP-A-0 480 330 décrit, dans un condenseur de climatisation de véhicule, un réservoir intermédiaire qui se fixe de manière amovible sur une embase solidaire de la boîte collectrice, traversée par les deux conduites de liaison.

Le but de l'invention est de simplifier le montage du condenseur, en faisant jouer à l'embase au moins un rôle supplémentaire en ce qui concerne les liaisons fluidiques et mécaniques.

L'invention vise notamment un condenseur du genre défini en introduction, et prévoit que l'embase comporte des moyens pour établir une liaison fluidique entre celui-ci et le reste dudit circuit.

Des caractéristiques optionnelles de l'invention, complémentaires ou alternatives, sont énoncées ci-après:
- Lesdits moyens pour établir une liaison fluidique comprennent une conduite de raccordement traversant l'embase de part en part.
- La conduite de raccordement communique directement par une première de ses extrémités avec la boîte collectrice.
- La seconde extrémité de la conduite de raccordement constitue la sortie du condenseur.
- La première extrémité de la conduite de raccordement est sensiblement alignée avec les extrémités respectives des conduites de liaison qui communiquent avec la boîte collectrice, dans la direction longitudinale de cette dernière.
- La conduite de raccordement communique avec la boîte collectrice au voisinage de l'extrémité inférieure de celle-ci.
- L'embase comporte en outre des moyens pour fixer le condenseur.
- Lesdits moyens pour fixer le condenseur comprennent un pion de montage propre à s'insérer dans une cavité conjuguée pour contribuer à la fixation du condenseur sur un support.
- Le pion de montage est tourné à l'opposé du réservoir par rapport à l'embase.
- Le pion de montage est tourné vers le bas du condenseur.
- Le pion de montage est disposé sensiblement selon un axe parallèle à celui du réservoir.
- Le condenseur comprend un faisceau comportant une multiplicité de tubes parallèles entre eux et perpendiculaires à la direction longitudinale de la boîte collectrice, dont chacun communique avec cette dernière à une de ses extrémités, ledit faisceau portant un second pion de montage décalé par rapport à celui de l'embase dans la direction longitudinale des tubes.
- Le réservoir est muni au voisinage d'une première de ses extrémités d'un filetage axial qui coopère pour sa fixation avec l'embase, lesdites conduites de liaison s'étendant dans celle-ci jusqu'en regard de ladite première extrémité.
- Le réservoir présente une tubulure axiale de passage de fluide qui fait saillie à sa première extrémité pour se raccorder à l'intérieur de l'embase à une première desdites conduites de liaison.
- Le réservoir présente à sa première extrémité des ouvertures de passage de fluide entourant ladite tubulure axiale et communiquant avec la seconde desdites conduites de liaison.
- La première conduite s'étend sensiblement perpendiculairement à la direction longitudinale du réservoir.
- La seconde conduite est oblique par rapport à la direction longitudinale du réservoir, et s'éloigne de la première conduite en direction de la boîte collectrice.
- Les première et seconde conduites sont disposées respectivement en aval et en amont du réservoir.
- L'embase est brasée sur la face externe d'une paroi tubulaire délimitant la boîte collectrice.
- Les conduites de liaison s'étendent sensiblement tangentiellement par rapport à ladite paroi tubulaire et débouchent latéralement à travers celle-ci.

Les caractéristiques et avantages de l'invention seront exposés plus en détail dans la description ci-après, en se référant aux dessins annexés, où des éléments identiques ou analogues sont désignés dans toutes les figures par les mêmes numéros de référence. Sur ces dessins:
- les figures 1, 2 et 3 sont des vues de face, de côté et de dessus d'un condenseur selon l'invention;
- la figure 4 est un schéma d'un circuit de fluide réfrigérant incorporant le condenseur;
- la figure 5 est une vue en coupe axiale du réservoir;
- les figures 6 à 8 sont des vues en élévation de l'embase;
- les figures 9 et 10 sont des vues en perspective de l'embase;
- la figure 11 est une vue de dessus de l'embase;
- les figures 12, 13 et 14 sont des vues analogues aux figures 1 à 3, relatives à un second mode de réalisation du condenseur;
- les figures 15 et 16 sont des vues en élévation de l'embase dans le second mode de réalisation;
- les figures 17 et 18 sont des vues en perspective de l'embase; et
- la figure 19 est une vue de dessus de l'embase.

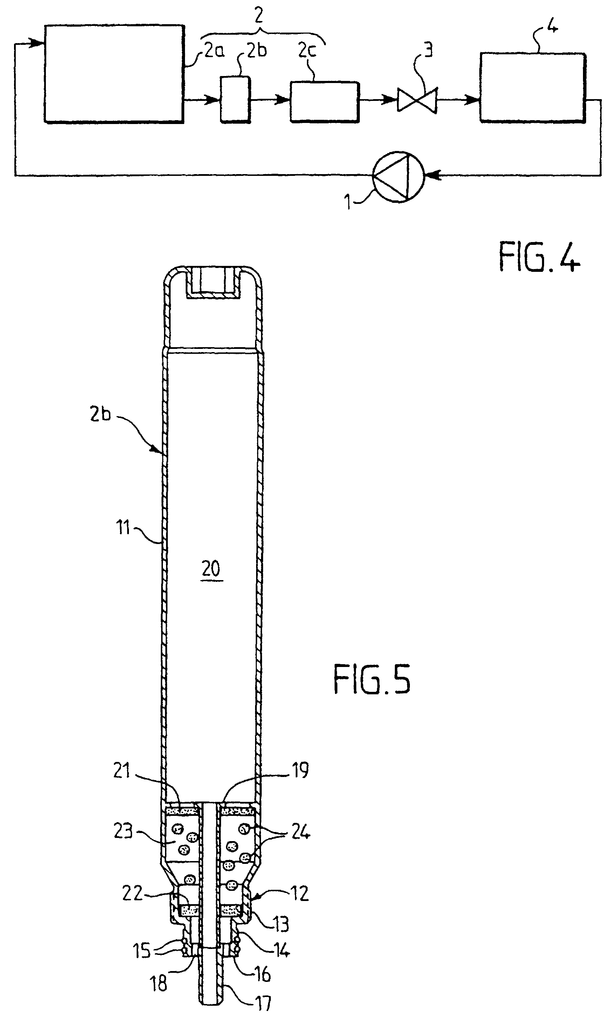

La figure 4 est un schéma d'un circuit de fluide réfrigérant faisant partie d'un dispositif de climatisation de l'habitacle d'un véhicule automobile. De manière connue, ce circuit comprend successivement un compresseur 1, un ensemble 2 désigné ci-après sous le nom de condenseur, un détendeur 3 et un évaporateur 4. Le condenseur 2 comporte une section amont 2a dans laquelle le fluide réfrigérant cède de la chaleur à un flux d'air de manière à se condenser, après avoir été le cas échéant "désurchauffé" à partir d'une température d'entrée supérieure à la température d'équilibre liquide/gaz. La section 2a est suivie d'un réservoir intermédiaire 2b, puis d'une section aval 2c dans laquelle le fluide est sous-refroidi par échange de chaleur avec le flux d'air.

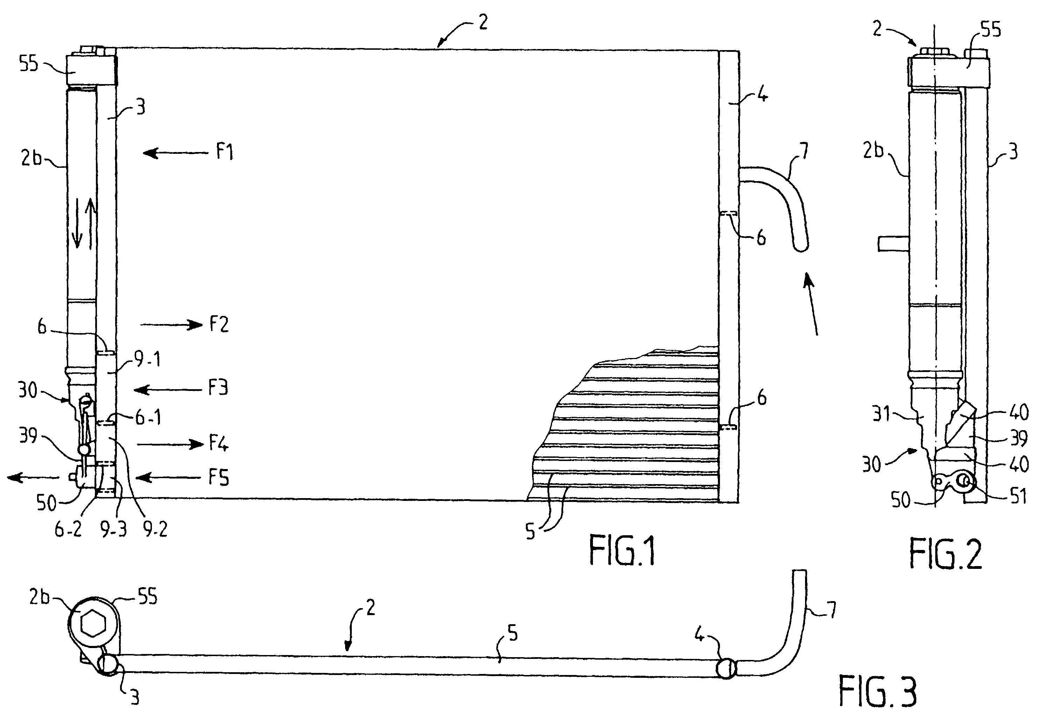

Un exemple de réalisation du condenseur 2 est montré dans sa structure générale sur les figures 1 à 3. Il comprend deux boîtes collectrices 3,4 allongées verticalement et écartées l'une de l'autre dans une direction horizontale, reliées entre elles par une multiplicité de tubes de circulation de fluide horizontaux 5. Chaque boîte collectrice est divisée en différentes chambres par des cloisons horizontales 6 de manière que le fluide circule, dans les tubes 5, alternativement d'une chambre de la boîte 3 à une chambre de la boîte 4 et inversement, depuis la chambre supérieure de la boîte 4, qui communique avec une tubulure d'entrée 7, jusqu'à la chambre inférieure de la boîte 3.

L'une des cloisons intermédiaires de la boîte collectrice 3, désignée par la référence 6-1, sépare l'une de l'autre des chambres 9-1 et 9-2, situées respectivement au-dessus et au-dessous de la cloison 6-1, et qui communiquent entre elles exclusivement par l'intermédiaire du réservoir 2b, lequel est allongé verticalement et s'étend le long de la boîte 3. La chambre 9-2 est à son tour séparée de la chambre inférieure de la boîte, désignée par la référence 9-3, par une cloison 6-2.

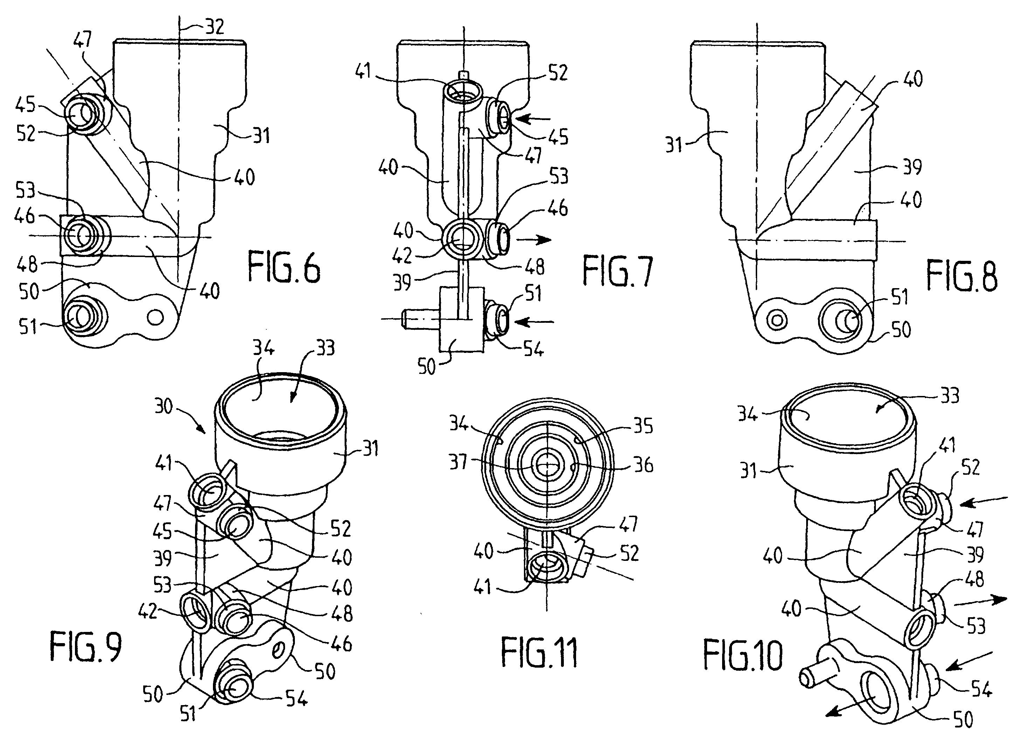

Comme on le voit plus particulièrement sur la figure 5, le réservoir 2b comprend un boîtier formé d'un corps cylindrique 11 occupant la majeure partie de sa hauteur, et d'un col rétréci 12 disposé à sa partie inférieure. Le col 12 présente à son tour une région 13 munie d'un filetage mâle et, au dessous de cette région filetée, une région 14 de plus petit diamètre, creusée de deux gorges circonférentielles pour le logement de deux joints toriques d'étanchéité 15. À son extrémité inférieure, le réservoir 2b présente une paroi transversale d'extrémité 16 traversée d'une part par une tubulure axiale 17 qui fait saillie vers le haut à l'intérieur du réservoir et vers le bas à l'extérieur de celui-ci, d'autre part par des ouvertures 18 entourant la tubulure 17. La tubulure 17 s'étend vers le haut jusqu'à une cloison intermédiaire perforée 19, qu'elle traverse pour déboucher dans un volume libre 20 compris entre la cloison 19 et l'extrémité supérieure fermée du réservoir et s'étendant sur la majeure partie de la hauteur de celui-ci. Deux rondelles perméables au fluide 21, 22, entourant la tubulure 17 et s'appuyant respectivement vers le haut sur la cloison 19 et vers le bas sur un épaulement reliant les régions 13 et 14, délimitent entre elles un volume annulaire de traitement 23 garni de particules 24 propres à filtrer et/ou déshydrater le fluide.

Le réservoir 2b est en liaison mécanique et de communication de fluide avec la boîte collectrice 3 par l'intermédiaire d'une embase 30 qui est représentée en détail sur les figures 6 à 10. Cette embase est de préférence une pièce moulée en alliage d'aluminium, définissant une paroi 31 sensiblement de révolution autour d'un axe vertical 32, qui délimite un logement 33 ouvert vers le haut pour le col du réservoir 2b. La surface latérale du logement 33 présente dans une région supérieure un filetage femelle 34 coopérant avec le filetage 13 du réservoir, de telle sorte que ce dernier a également pour axe l'axe 32. Une région médiane cylindrique 35 coopère avec les joints d'étanchéité 15, et une région inférieure cylindrique 36 entoure la tubulure 17 et délimite avec celle-ci, dont l'extrémité libre s'appuie sur un siège 37 prévu au fond du logement 33, un espace annulaire.

À la paroi 31 se raccorde extérieurement un voile 39 s'étendant sensiblement selo un plan passant par l'axe 32. Ce voile présente, de part et d'autre de ce plan, des renflements 40 qui permettent de loger deux conduites 41, 42 allongées parallèlement à ce plan. Dans une étape intermédiaire de la fabrication de l'embase, la conduite 41 débouche par ses deux extrémités respectivement dans le logement 33, au niveau de l'espace annulaire précité, et dans le bord libre du voile 39, et est inclinée vers le haut de l'une vers l'autre. La conduite 42 s'étend horizontalement depuis le bord libre du voile jusqu'au dessous du logement 33, où elle forme un coude vers le haut pour déboucher au fond de celui-ci, à l'intérieur du siège annulaire 37. Dans l'embase terminée, des bouchons brasés non représentés obturent de manière étanche les extrémités libres des conduites 41, 42 et celles-ci débouchent à l'extérieur exclusivement par des passages 45, 46 ménagés dans des bossages latéraux 47, 48 formés sur les renflements 40.

Un bossage 50 formé à l'extrémité inférieure du voile 39 s'étend de part et d'autre du plan de celui-ci. Le bossage 50 est traversé de part en part par une conduite 51. Les bossages 47, 48, 50 forment, autour des extrémités des passages 45 et 46 et de la conduite 51 tournées vers la boîte collectrice 3, des embouts tubulaires cylindriques 52, 53, 54 qui sont mutuellement alignés dans la direction de l'axe 32.

L'embase 30 est fixée sur la boîte collectrice 3 par brasage des bossages 47, 48, 50 sur la face extérieure de la paroi tubulaire en tôle d'aluminium de la boîte, lors de l'assemblage du condenseur par brasage. Les passages 45 et 46 et la conduite 51 communiquent avec les chambres 9-1, 9-2 et 9-3 respectivement de la boîte par des trous prévus dans la paroi tubulaire et dans lesquels s'engagent les embouts 52 à 54.

Le fluide pénétrant par la tubulure 7 dans la chambre supérieure de la boîte collectrice 4 parcourt un premier groupe de tubes selon la flèche F1 pour atteindre la chambre supérieure de la boîte 3, puis deux autres groupes de tubes, selon les flèches F2 et F3, pour passer dans la chambre intermédiaire de la boîte 4 et dans la chambre 9-1 de la boîte 3. Le fluide condensé parvenant ainsi dans la chambre 9-1 passe de celle-ci dans l'espace annulaire de l'embase par le passage 45 et la conduite inclinée 41, puis pénètre dans le réservoir 2b, vissé dans l'embase, par les ouvertures 18. Il traverse alors le volume 23 où il est desséché et filtré par les particules 24, et s'accumule dans le volume 20, où la phase gazeuse résiduelle éventuelle se rassemble à la partie supérieure. Le fluide quitte le volume 20, exclusivement à l'état liquide, par la tubulure 17, et atteint la chambre 9-2 de la boîte collectrice 3 par la conduite horizontale 42 et le passage 46. Ainsi, les tubes 5 et les chambres des boîtes 3 et 4 situés plus haut que la cloison 6-1, y compris la chambre 9-1, constituent la section amont 2a du condenseur, tandis que les tubes et les chambres situés plus bas que cette cloison, y compris la chambre 9-2, constituent la section aval 2c. Le fluide passe de la chambre 9-2 à la chambre inférieure de la boîte collectrice 4 selon la flèche F4, puis est acheminé vers la chambre 9-3 selon la flèche F5. Le fluide quitte cette dernière chambre, et le condenseur, par la conduite 51, le bossage 50 jouant le rôle de tubulure de sortie et remplaçant ainsi une tubulure rapportée supplémentaire.

Une bride de maintien 55 relie mécaniquement l'extrémité supérieure du réservoir 2b à celle de la boîte collectrice 3 pour une fixation plus stable du réservoir.

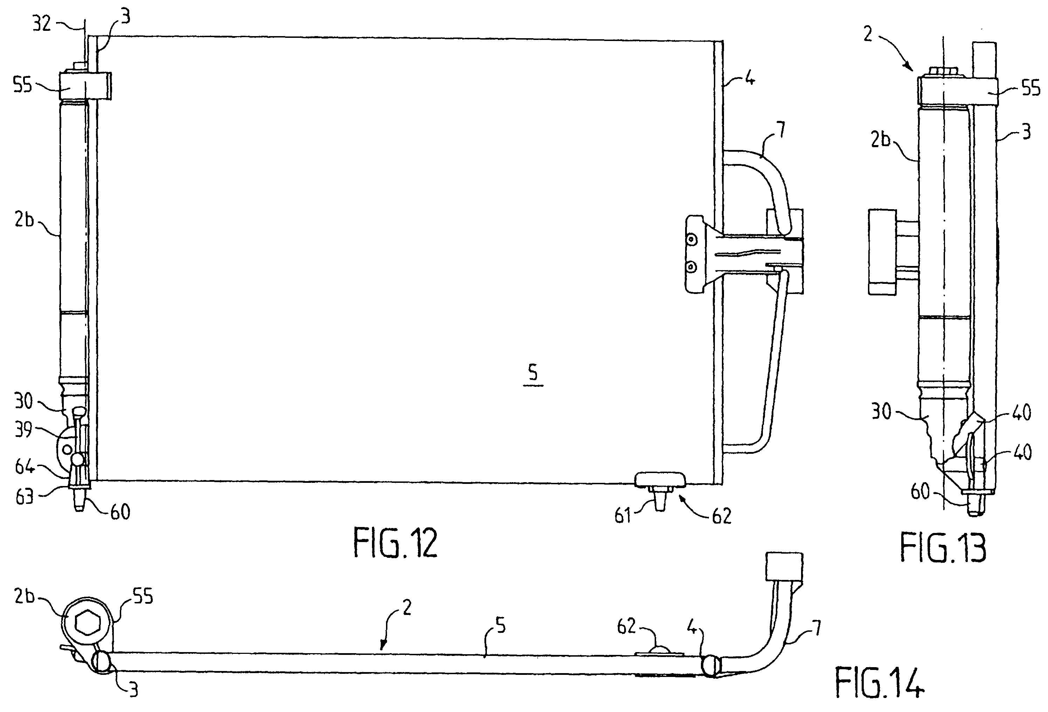

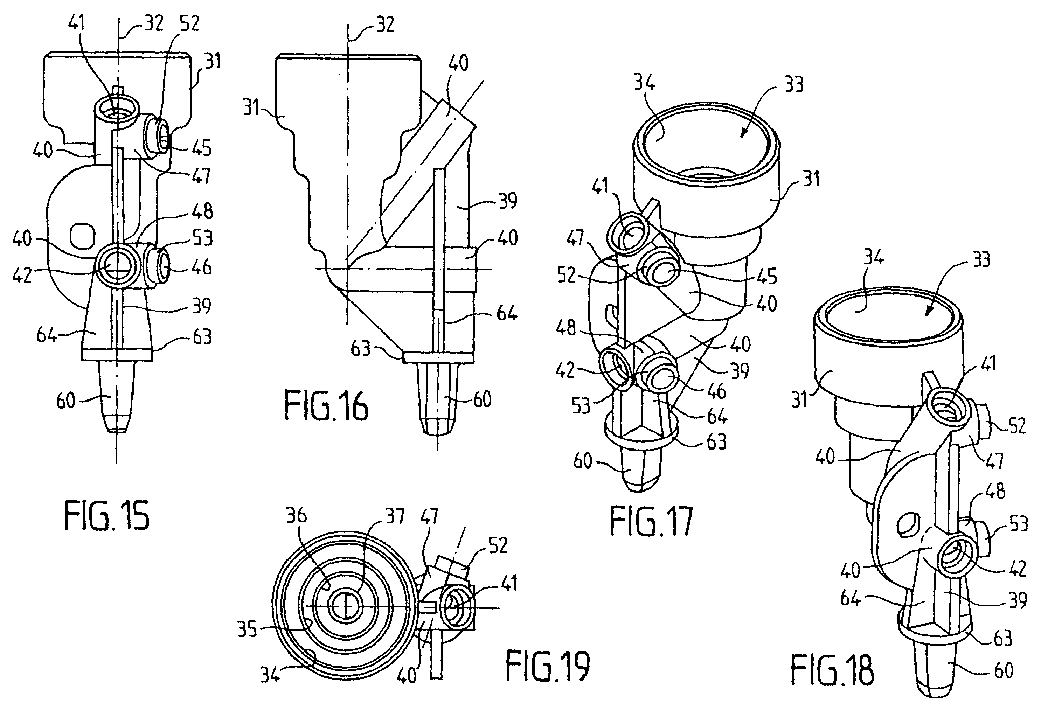

Le condenseur des figures 12 à 14 présente la même constitution générale que celui décrit jusqu'ici, dont il diffère quelque peu par des caractéristiques connues, sans relation avec l'invention, qui ne seront pas décrites en détail. Il en diffère également par son embase, qui est représentée en détail sur les figures 15 à 19. Cette embase 30 est identique à celle décrite précédemment en ce qui concerne sa coopération avec le réservoir 2b et la communication entre celui-ci et les chambres de la boîte collectrice 3. Elle en diffère essentiellement par l'absence du bossage 50 et de la conduite 51, et par la présence d'un pion de montage 60. Le pion 60 est semblable à un pion de montage connu 61 qui fait partie d'une pièce indépendante 62 fixée sur le bord inférieur du faisceau de tubes 5, au voisinage de la boîte collectrice 4. Comme le pion 61, le pion 60 fait saillie vers le bas, selon un axe vertical, à partir d'un disque horizontal 63, sa section étant inférieure à la surface du disque et allant en diminuant vers son extrémité inférieure. Dans l'exemple illustré, l'axe du pion 60 est décalé par rapport à l'axe 32 du réservoir en direction du plan médian du faisceau de tubes 5. Le disque 63 est disposé à l'extrémité inférieure d'un croisillon formé par le voile 39 et par une nervure 64 s'étendant de part et d'autre de celui-ci, perpendiculairement à son plan. Les pions 60 et 61 sont destinés à s'engager dans des cavités conjuguées d'un support, appartenant par exemple à la carrosserie ou au châssis d'un véhicule, pour contribuer à la fixation du condenseur 2. La présence du pion 60 évite d'avoir à fixer sur le faisceau, comme cela est usuel, une seconde pièce semblable à la pièce 62, au voisinage de la boîte collectrice 3.

Bien entendu, l'embase du condenseur selon l'invention peut comporter des moyens de fixation et/ou des moyens de liaison fluidiques différents de ceux décrits à titre d'exemple. De même, des moyens de fixation et des moyens de liaison peuvent être combinés sur une même embase.

## Revendications

1. Condenseur (2) propre à faire partie d'un circuit de fluide, notamment de fluide réfrigérant dans un dispositif de climatisation de l'habitacle d'un véhicule automobile, comprenant une boîte collectrice (3) et un réservoir intermédiaire allongé (2b) pour le traitement et/ou l'accumulation du fluide, qui se fixe de manière amovible sur une embase (30) solidaire de la boîte collectrice, traversée par deux conduites de liaison (41, 42, 45, 46) pour le transfert du fluide de la boîte collectrice au réservoir et inversement, **caractérisé en ce que** l'embase comporte des moyens (51) pour établir une liaison fluidique entre le condenseur et le reste dudit circuit.

2. Condenseur selon la revendication 1, **caractérisé en ce que** lesdits moyens pour établir une liaison fluidique comprennent une conduite de raccordement (51) traversant l'embase de part en part.

3. Condenseur selon la revendication 2, **caractérisé en ce que** la conduite de raccordement communique directement par une première (54) de ses extrémités avec la boîte collectrice.

4. Condenseur selon la revendication 3, **caractérisé en ce que** la seconde extrémité de la conduite de raccordement constitue la sortie du condenseur.

5. Condenseur selon l'une des revendications 3 et 4, **caractérisé en ce que** la première extrémité (54) de la conduite de raccordement est sensiblement alignée avec les extrémités respectives (52, 53) des conduites de liaison (41, 42, 45, 46) qui communiquent avec la boite collectrice, dans la direction longitudinale de cette dernière.

6. Condenseur selon l'une des revendications 3 à 5, **caractérisé en ce que** la conduite de raccordement communique avec la boîte collectrice au voisinage de l'extrémité inférieure de celle-ci.

7. Condenseur selon l'une des revendications précédentes, **caractérisé en ce que** l'embase comporte en outre des moyens (60) pour fixer le condenseur.

8. Condenseur selon la revendication 7, **caractérisé en ce que** lesdits moyens pour fixer le condenseur comprennent un pion de montage (60) propre à s'insérer dans une cavité conjuguée pour contribuer à la fixation du condenseur sur un support.

9. Condenseur selon la revendication 8, **caractérisé en ce que** le pion de montage est tourné à l'opposé du réservoir par rapport à l'embase.

10. Condenseur selon la revendication 9, **caractérisé en ce que** le pion de montage est tourné vers le bas du condenseur.

11. Condenseur selon l'une des revendications 9 et 10, **caractérisé en ce que** le pion de montage est disposé sensiblement selon un axe parallèle à celui (32) du réservoir.

12. Condenseur selon l'une des revendications 9 à 11, **caractérisé en ce qu'**il comprend un faisceau comportant une multiplicité de tubes (5) parallèles entre eux et perpendiculaires à la direction longitudinale de la boîte collectrice, dont chacun communique avec cette dernière à une de ses extrémités, ledit faisceau portant un second pion de montage (61) décalé par rapport à celui de l'embase dans la direction longitudinale des tubes.

13. Condenseur selon l'une des revendications précédentes, **caractérisé en ce que** le réservoir est muni au voisinage d'une première (16) de ses extrémités d'un filetage axial (13) qui coopère pour sa fixation avec l'embase, lesdites conduites de liaison s'étendant dans celle-ci jusqu'en regard de ladite première extrémité.

14. Condenseur selon l'une des revendications précédentes, **caractérisé en ce que** le réservoir présente une tubulure axiale (17) de passage de fluide qui fait saillie à sa première extrémité (16) pour se raccorder à l'intérieur de l'embase à une première (42, 46) desdites conduites de liaison.

15. Condenseur selon la revendication 14, **caractérisé en ce que** le réservoir présente à sa première extrémité (16) des ouvertures (18) de passage de fluide entourant ladite tubulure axiale et communiquant avec la seconde (41) desdites conduites de liaison.

16. Condenseur selon l'une des revendications 14 et 15, **caractérisé en ce que** la première conduite (42, 46) s'étend sensiblement perpendiculairement à la direction longitudinale du réservoir.

17. Condenseur selon l'une des revendications 14 à 16, **caractérisé en ce que** la seconde conduite (41, 45) est oblique par rapport à la direction longitudinale du réservoir, et s'éloigne de la première conduite en direction de la boîte collectrice.

18. Condenseur selon l'une des revendications 14 à 17, **caractérisé en ce que** les première et seconde conduites sont disposées respectivement en aval et en amont du réservoir.

19. Condenseur selon l'une des revendications précédentes, **caractérisé en ce que** l'embase est brasée sur la face externe d'une paroi tubulaire délimitant la boîte collectrice.

20. Condenseur selon la revendication 19, **caractérisé en ce que** les conduites de liaison s'étendent sensiblement tangentiellement par rapport à ladite paroi tubulaire et débouchent latéralement à travers celle-ci.

## Patentansprüche

1. Kondensator (2), der geeignet ist, Teil eines Fluidkreislaufs, insbesondere für ein Kühlfluid in einer Klimaanlage für den Fahrgastraum eines Kraftfahrzeugs, zu sein, mit einem Sammelkasten (3) und einem länglichen Zwischenspeicher (2b) für die Behandlung und/oder Sammlung des Fluids, das abnehmbar an einem Sockelelement (30) befestigt ist, das mit dem Sammelkasten fest verbunden ist und von zwei Verbindungsleitungen (41, 42, 45, 46) für die Übertragung von Fluid von dem Sammelkasten zu dem Speicher und umgekehrt durchquert wird, **dadurch gekennzeichnet, dass** das Sockelelement Mittel (51) zur Herstellung einer Fluidverbindung zwischen dem Kondensator und dem Rest des Kreislaufs umfasst.

2. Kondensator nach Anspruch 1, **dadurch gekennzeichnet, dass** die Mittel zur Herstellung einer Fluidverbindung eine Anschlussleitung (51) umfassen, die das Sockelelement durchquert.

3. Kondensator nach Anspruch 2, **dadurch gekennzeichnet, dass** die Anschlussleitung direkt über ein erstes (54) ihrer Enden mit dem Sammelkasten in Verbindung steht.

4. Kondensator nach Anspruch 3, **dadurch gekennzeichnet, dass** das zweite Ende der Anschlussleitung den Ausgang des Kondensators bildet.

5. Kondensator nach einem der Ansprüche 3 und 4, **dadurch gekennzeichnet, dass** das erste Ende (54) der Anschlussleitung im Wesentlichen zu den jeweiligen Enden (52, 53) der Verbindungsleitungen (41, 42, 45, 46), die mit dem Sammelkasten in Verbindung stehen, in der Längsrichtung dieses Letzteren ausgerichtet ist.

6. Kondensator nach einem der Ansprüche 3 bis 5, **dadurch gekennzeichnet, dass** die Anschlussleitung mit dem Sammelkasten in der Nähe von dessen unterem Ende in Verbindung steht.

7. Kondensator nach einem der vorhergehenden Ansprüche, **dadurch gekennzeichnet, dass** das Sockelelement zudem Mittel (60) zur Befestigung des Kondensators umfasst.

8. Kondensator nach Anspruch 7, **dadurch gekennzeichnet, dass** die Mittel zur Befestigung des Kondensators einen Montagezapfen (60) umfassen, der geeignet ist, in einen passenden Hohlraum einzutreten, um zur Befestigung des Kondensators an einem Träger beizutragen.

9. Kondensator nach Anspruch 8, **dadurch gekennzeichnet, dass** der Montagezapfen relativ zum Sockelelement zur gegenüberliegenden Seite des Speichers gerichtet ist.

10. Kondensator nach Anspruch 9, **dadurch gekennzeichnet, dass** der Montagezapfen zur Unterseite des Speichers gerichtet ist.

11. Kondensator nach einem der Ansprüche 9 und 10, **dadurch gekennzeichnet, dass** der Montagezapfen im Wesentlichen längs einer Achse angeordnet ist, die zu derjenigen (32) des Speichers parallel ist.

12. Kondensator nach einem der Ansprüche 9 bis 11, **dadurch gekennzeichnet, dass** er ein Bündel umfasst, das mehrere Rohre (5) umfasst, die zueinander parallel und senkrecht zu der Längsrichtung des Sammelkastens liegen und die jeweils mit diesem Letzteren an einem seiner Enden in Verbindung stehen, wobei das Bündel einen zweiten Montagezapfen (61) trägt, der relativ zu demjenigen des Sockelelements in der Längsrichtung der Rohre versetzt ist.

13. Kondensator nach einem der vorhergehenden Ansprüche, **dadurch gekennzeichnet, dass** der Speicher in der Nähe eines ersten (16) seiner Enden mit einem axialen Gewinde (13) versehen ist, das zu seiner Befestigung mit dem Sockelelement zusammenwirkt, wobei die Verbindungsleitungen sich in diesem bis gegenüber dem ersten Ende erstrecken.

14. Kondensator nach einem der vorhergehenden Ansprüche, **dadurch gekennzeichnet, dass** der Speicher einen axialen Rohransatz (17) für den Durchtritt von Fluid aufweist, der an seinem ersten Ende (16) vorspringt, um an das Innere des Sockelelements an einer ersten (42, 46) der Verbindungsleitungen angeschlossen zu sein.

15. Kondensator nach Anspruch 14, **dadurch gekennzeichnet, dass** der Speicher an seinem ersten Ende (16) Öffnungen (18) zum Durchtritt von Fluid aufweist, die den axialen Rohransatz umgeben und mit der zweiten (41) der Verbindungsleitungen in Verbindung stehen.

16. Kondensator nach einem der Ansprüche 14 und 15, **dadurch gekennzeichnet, dass** die erste Leitung (42, 46) sich im Wesentlichen senkrecht zu der Längsrichtung des Speichers erstreckt.

17. Kondensator nach einem der Ansprüche 14 bis 16, **dadurch gekennzeichnet, dass** die zweite Leitung (41, 45) relativ zur Längsrichtung des Speichers schräg liegt und von der ersten Leitung weg in Richtung des Sammelkastens verläuft.

18. Kondensator nach einem der Ansprüche 14 bis 17, **dadurch gekennzeichnet, dass** die erste und zweite Leitung stromabwärts beziehungsweise stromaufwärts von dem Speicher angeordnet sind.

19. Kondensator nach einem der vorhergehenden Ansprüche, **dadurch gekennzeichnet, dass** das Sockelelement auf die Außenfläche einer rohrförmigen, den Sammelkasten begrenzenden Wand gelötet ist.

20. Kondensator nach Anspruch 19, **dadurch gekennzeichnet, dass** die Verbindungsleitungen im Wesentlichen tangential zu der rohrförmigen Wand verlaufen und seitlich durch diese hindurch münden.

## Claims

1. Condenser (2) able to form part of a fluid circuit, particularly for coolant in a motor vehicle cabin air-conditioning device, comprising a header box (3) and an elongate intermediate reservoir (2b) for the treatment and/or accumulation of fluid, which is fixed removably on a base (30) secured to the header box, through which there pass two connecting ducts (41, 42, 45, 46) for the transfer of fluid from the header box to the reservoir and vice versa, **characterized in that** the base comprises means (51) for establishing a fluidic connection between the condenser and the rest of the said circuit.

2. Condenser according to Claim 1, **characterized in that** the said means for establishing a fluidic connection comprise a coupling duct (51) passing right through the base.

3. Condenser according to Claim 2, **characterized in that** the coupling duct communicates directly, via a first (54) of its ends, with the header box.

4. Condenser according to Claim 3, **characterized in that** the second end of the coupling duct constitutes the outlet from the condenser.

5. Condenser according to one of Claims 3 and 4, **characterized in that** the first end (54) of the coupling duct is more or less aligned with the respective ends (52, 53) of the connecting ducts (41, 42, 45, 46) that communicate with the header box, in the longitudinal direction of the latter.

6. Condenser according to one of Claims 3 to 5, **characterized in that** the coupling duct communicates with the header box near the lower end thereof.

7. Condenser according to one of the preceding claims, **characterized in that** the base further comprises means (60) for attaching the condenser.

8. Condenser according to Claim 7, **characterized in that** the said means for attaching the condenser comprise a mounting peg (10) able to be inserted into a mating cavity to contribute to the attachment of the condenser to a support.

9. Condenser according to Claim 8, **characterized in that** the mounting peg faces away from the reservoir with respect to the base.

10. Condenser according to Claim 9, **characterized in that** the mounting peg faces towards the bottom of the condenser.

11. Condenser according to one of Claims 9 and 10, **characterized in that** the mounting peg is arranged roughly on an axis parallel to that (32) of the reservoir.

12. Condenser according to one of Claims 9 to 11, **characterized in that** it comprises a bundle made up of a multitude of mutually parallel tubes (5) perpendicular to the longitudinal direction of the header box, each of which tubes communicates with this header box at one of its ends, the said bundle bearing a second mounting peg (61) that is offset with respect to that of the base in the longitudinal direction of the tubes.

13. Condenser according to one of the preceding claims, **characterized in that** the reservoir is equipped, near a first (16) of its ends, with an axial screwthread (13) that collaborates for its attachment with the base, the said connecting ducts extending through this base as far as to face the said first end.

14. Condenser according to one of the preceding claims, **characterized in that** the reservoir has an axial nozzle (17) for the passage of fluid, which projects at its first end (16) to be coupled inside the base to a first (42, 46) of the said connecting ducts.

15. Condenser according to Claim 14, **characterized in that** the reservoir at its first end (16) has fluid passage openings (18) surrounding the said axial nozzle and communicating with the second (41) of the said connecting ducts.

16. Condenser according to one of Claims 14 and 15, **characterized in that** the first duct (42, 46) runs roughly at right angles to the longitudinal direction of the reservoir.

17. Condenser according to one of Claims 14 to 16, **characterized in that** the second duct (41, 45) is oblique with respect to the longitudinal direction of the reservoir and diverges from the first duct in the direction of the header box.

18. Condenser according to one of Claims 14 to 17, **characterized in that** the first and second ducts are arranged respectively downstream and upstream of the reservoir.

19. Condenser according to one of the preceding claims, '**characterized in that** the base is brazed onto the external face of a tubular wall delimiting the header box.

20. Condenser according to Claim 19, **characterized in that** the connecting ducts run roughly tangentially to the said tubular wall and open through the latter laterally.
